# EUROPÄISCHE PATENTSCHRIFT

(11) **EP 1 972 407 B1**
(45) Veröffentlichungstag und Bekanntmachung des Hinweises auf die Patenterteilung: **09.11.2011**
(21) Anmeldenummer: 07018730.7
(22) Anmeldetag: 24.09.2007
(51) Int. Cl.: B23K 26/24, B60N 2/68

(54) **Verfahren zur Herstellung durch Laser- oder Elektronstrahlschweissen einer Lehnen- und/oder Sitzstruktur**
Method of manufacturing by electron or laser beam welding of a back and/or seat structure
Procédé de fabrication par soudage laser ou électron d'une structure de dossier et/ou d'assise

(30) Priorität: 22.03.2007 DE 102007013744
(43) Veröffentlichungstag der Anmeldung: 24.09.2008
(73) Patentinhaber: Karosseriewerke Dresden GmbH, 01454 Radeberg (DE)
(72) Erfinder: Ullrich, Jens, 01259 Dresden (DE); Menten, Rainer, 01468 Moritzburg (DE); Schneider, Harald, 38458 Velpke (DE)
(74) Vertreter: Grünecker, Kinkeldey, Stockmair & Schwanhäusser

(56) Entgegenhaltungen:
- EP-A- 0 614 329
- EP-A- 1 180 410
- GB-A- 1 344 320
- US-A- 4 665 294
- US-A1- 2005 061 786
- US-A1- 2005 166 398

## Beschreibung

Die vorliegende Erfindung betrifft ein Verfahren zur Herstellung einer Lehnen- und/oder Sitzstruktur,gemäß dem Oberbegriff des Anspruchs 1 (sich z.B., GB 1344 320) wie sie insbesondere in Fahrzeugen Verwendung findet.

Es wird als bekannt angesehen, dass ein U-Profil mit einem flachen Blech mittels Buckelschweißen verbunden wird. Bei diesem Widerstandsschweißverfahren wird die zum Schweißen notwendige Stromdichte nicht durch die Schweißelektrode, sondern durch die bucklige Bauteilform des U-Profils bzw. des Bleches erreicht. Insbesondere bei Lehnenund/oder Sitzstrukturen für Fahrzeuge, die im Falle eines Unfalles hohen Belastungen ausgesetzt sind, erweist es sich als Nachteil, dass ein mittels Buckelschweißen hergestellter Verbundkörper schlechtere Festigkeits- und Steifigkeitseigenschaften besitzt. Auch wird die Prozesssicherheit beim Buckelschweißen nicht als ausreichend für derartige Anwendungen angesehen.

Es wird ebenso als bekannt angesehen, U-Profile mit einem flachen Blech mittels MIG-/ MAG-Schweißen zu verbinden. Zwar ist es möglich, durch diese Lichtbogenschweißverfahren zuverlässige Schweißnähte herzustellen, jedoch sind diese Verfahren durch die Verwendung von Inert- oder Aktivgasen sehr aufwendig und kostenintensiv, insbesondere im Fall der Automatisierung.

Ebenso ist es möglich, Profile mit einem hutförmigen Querschnitt auf einem flachen Blech mittels Widerstandspunktschweißen oder Laserschweißen anzubringen. Das hutförmige Profil weist hierzu an beiden Seiten Flanschabschnitte auf, die durch Schweißpunkte auf eine Oberfläche des flachen Bleches geheftet werden, oder mittels einer Laserschweißnaht mit dieser Oberfläche verbunden werden. Hierbei erweist sich der höhere Materialeinsatz bei den hutförmigen Profilen als nachteilig, da diese an beiden Seiten Flanschabschnitte aufweisen, die mit dem flachen Blech verbunden werden.

Des Weiteren zeigt das Dokument US 4,665,294 eine Möglichkeit um zwei Bauteile, beispielsweise Aluminium Legierungen zusammen zu schweißen. Dabei wird ein Zusatzmetall zwischen den zu verschweißenden Auflagepunkten gebracht. Bei diesem Zusatzmetall handelt es sich vorzugsweise um Silizium wenn bestimmte Aluminium Legierungen verschweißt werden sollen. Ein Laser- oder Elektronenstrahl sorgt für die Erhitzung der Bauteile, wodurch das Zusatzmetall mit den Bauteilen verschweißt wird. Als nachteilig wird hier angesehen, dass zusätzliche Kosten und eine erhöhte Komplexität aufgrund der Bereitstellung und des Anbringens des Zusatzmetalls entstehen.

Es ist Aufgabe der vorliegenden Erfindung, ein kosteneffizientes Verfahren zur Herstellung eines Verbundkörpers, insbesondere einer Lehnen- und/oder Sitzstruktur, anzugeben, mit dem sich Materialeinsparungen realisieren lassen.

Die vorliegende Aufgabe wird erfindungsgemäß durch die Merkmale des Anspruches 1 gelöst.

Da die Stegkante mit der Vorderseite des flächigen Bauteils verschweißt wird, ist es möglich, auf die Flanschabschnitte eines hutförmigen Profils zu verzichten. Durch diese Materialeinsparungen lassen sich leichtgewichtige Verbundkörper herstellen, denen insbesondere in Zeiten steigender Kraftstoffpreise im Automobilbau eine hohe Bedeutung zukommt. Da die Verschweißung mittels eines gerichteten Energiestrahls erfolgt, ist dieses Schweißverfahren prozesskostenkünstig und lässt sich zudem auf einfache Art und Weise für die Massenproduktion automatisieren.

Durch eine lokal begrenzte Schmelzzone wird insbesondere verhindert, dass sich die Rückseite des flächigen Bauteils aufgrund der beim Schweißen entstehenden Wärme verformt und/oder ihre Materialeigenschaften verändert.

Vorzugsweise wird der Energiestrahl in einem Winkelbereich von +45° bis -45° zur Senkrechten, insbesondere rechtwinklig, auf die Rückseite des flächigen Bauteils gerichtet.

flächigen Bauteils gebildet wird. Dadurch wird insbesondere verhindert, dass sich die Rückseite des flächigen Bauteils aufgrund der beim Schweißen entstehenden Wärme verformt und/oder ihre Materialeigenschaften verändert.

Vorzugsweise ist der Energiestrahl ein Laserstrahl. Gemäß einem weiteren bevorzugten Ausführungsbeispiel ist der Energiestrahl ein Elektronenstrahl. Beiden bevorzugten Ausführungsbeispielen ist gemein, dass sowohl durch den Laserstrahl als auch durch den Elektronenstrahl hohe Energiedichten erreicht werden können, und diese Energiedichten sehr genau und lokal begrenzt in die zu verschweißenden Bauteilbereiche eingebracht werden können.

Vorzugsweise wird/werden das flächige Bauteil und/oder das Profilbauteil aus Stahl, Edelstahl, oder aus Legierungen auf Aluminium- und/oder Magnesiumbasis hergestellt.

Vorzugsweise kann die Intensität und/oder Wellenlänge des Energiestrahls in Abhängigkeit von der Dicke des flächigen Bauteils und/oder der gewünschten Eindringtiefe entlang der Stegkante des Profilbauteils angepasst werden.

Gemäß einem weiteren bevorzugten Ausführungsbeispiel kann die Intensität und/oder Wellenlänge des Energiestrahls, sowie die Führung des Energiestrahls an die Wärmeleitfähigkeit und/oder Reflektivität des Materials des flächigen Bauteils und/oder des Profilbauteils angepasst werden.

Die vorliegende Erfindung wird nachfolgend anhand von bevorzugten Ausführungsbeispielen in Verbindung mit den zugehörigen Figuren näher erläutert. In diesen zeigen:
- Figur 1: eine Draufsicht auf einen Verbundkörper, und
- Figur 2: eine Schnittdarstellung entlang einer Schnittlinie A - A in Figur 1.

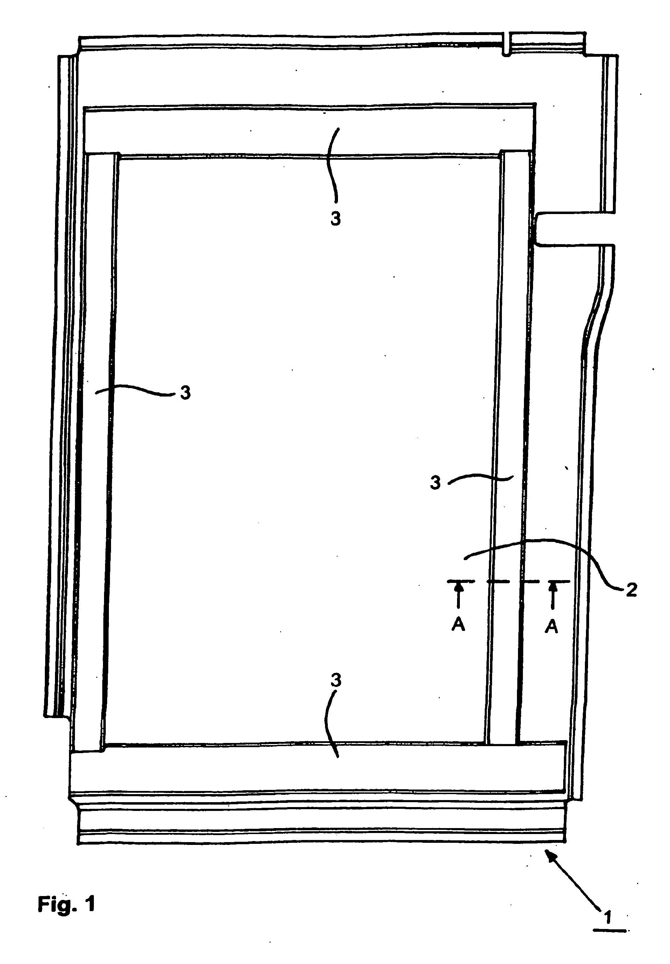

In Figur 1 ist einen Verbundkörper 1 in einer Draufsicht gezeigt. Bei dem Verbundkörper 1 handelt es sich um eine Lehnen- und/oder Sitzstruktur für ein Fahrzeug, wie sie als tragende oder verstärkende Bauteile in Kraftfahrzeugsitzen vorgesehen werden können.

Der Verbundkörper 1 weist zumindest ein flächiges Bauteil 2 sowie zumindest ein Profilbauteil 3 auf. In dem dargestellten Ausführungsbeispiel besteht der Verbundkörper 1 aus insgesamt vier ineinandergreifenden Profilbauteilen 3, die jeweils mit dem flächigen Bauteil 2 verschweißt sind.

Jedoch ist es natürlich auch denkbar, eine kleinere oder größere Anzahl von Profilbauteilen 3 mit dem flächigen Bauteil 2 zu verschweißen. Diese Profilbauteile 3 können gleiche oder unterschiedliche Profilquerschnitte aufweisen. Ebenso kann auch ein Profilbauteil 3 mit mehreren flächigen Bauteilen 2 in Anlage gebracht und verschweißt werden.

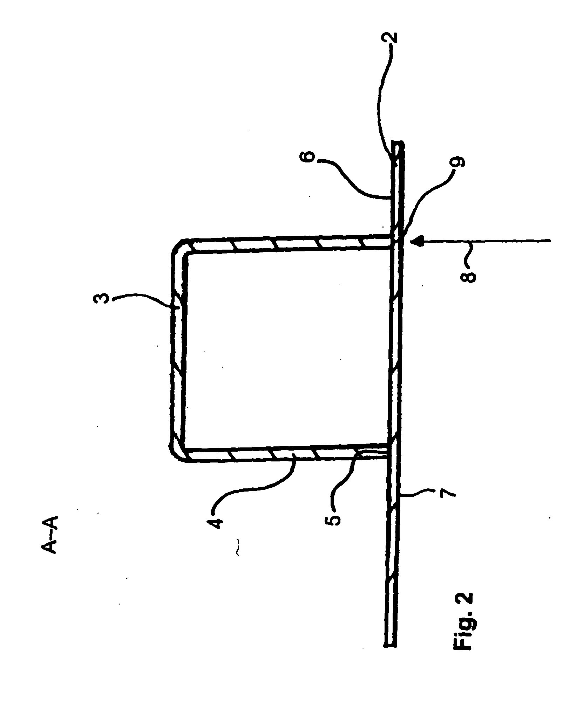

In Figur 2 ist eine Schnittdarstellung entlang einer in Figur 1 dargestellten Schnittlinie A - A durch einen Bereich des Verbundkörpers 1 gezeigt. Das Profilbauteil 3 weist zumindest einen stegförmigen Abschnitt 4 auf. In dem in Figur 2 dargestellten Ausführungsbeispiel weist das Profilbauteil 3 zumindest zwei sich gegenüberliegende stegförmige Abschnitte 4 auf. Hierzu kann das Profilbauteil 3 beispielsweise einen U- oder V-förmigen Querschnitt haben. Jedoch sind beispielsweise auch T-, 1- oder W-förmige Profilquerschnitte mit zwei oder mehreren sich gegenüberliegenden oder aneinander angrenzenden stegförmigen Abschnitten 4 möglich.

In dem erläuterten Ausführungsbeispiel definieren Wandungen von sich in der Zeichenebene gegenüberliegenden stegförmigen Abschnitten 4 eine Querachse des Profilbauteils 3, und eine Längsachse des Profilbauteils 3 erstreckt sich in die Zeichenebene der Figur 2 hinein. Eine Höhenachse des Profilbauteils 3 verläuft demzufolge parallel zur Zeichenebene entlang der einzelnen stegförmigen Abschnitte 4, ausgehend von einer Stegkante 5 des stegförmigen Abschnitts 4 zu einem in Figur 2 obenliegenden Bodenabschnitt des Profilbauteils 3.

Der stegförmige Abschnitt 4 ist an seinem äußersten Ende durch die Stegkante 5 begrenzt. Diese Stegkante kann stetig in einer Ebene verlaufen, kann jedoch auch nicht stetig sein, beispielsweise wenn die Wandung des stegförmige Abschnitts 4 in ihren Randbereichen Aussparungen aufweist. Die Stegkante 5 stellt somit einen flächigen Abschnitt dar, der sich in Richtung der Längsachse des Profilbauteils 3 erstreckt und einen Abschluss des stegförmigen Abschnittes 4 bildet.

Es ist nicht zwingend erforderlich, dass der flächige Abschnitt der Stegkante 5 rechtwinklig zur Wandung des stegförmigen Abschnitts 4 ist. Beispielsweise kann diese auch in einem spitzen oder stumpfen Winkel zu der Wandung in Richtung der Längsachse verlaufen. Jedoch bildet die Stegkante 5 mit Bezug auf die Wandung des stegförmigen Abschnitts 4 keinen Vorsprung im Sinne eines Flansches.

Wie in Figur 2 dargestellt, ist die Stegkante 5 mit einer Oberfläche des flächigen Bauteils 2 durch ein Schweißverfahren mittels eines Energiestrahls 8 verbunden, wobei die Oberfläche des flächigen Bauteils 2, die mit der Stegkante 5 des Profilbauteils 3 verbunden ist, im Folgenden als Vorderseite 6 des flächigen Bauteils 2 bezeichnet wird.

Vorzugsweise wird das flächige Bauteil 2 und/oder das Profilbauteil 3 aus Stahl bzw. aus Edelstahl hergestellt. Alternativ ist es jedoch auch möglich, das flächige Bauteil 2 und/oder das Profilbauteil 3 aus einer oder aus verschiedenen Legierungen auf Aluminium- und/oder auf Magnesiumbasis herzustellen.

Im Folgenden wird ein Verfahren zur Herstellung des Verbundkörpers 1 beschrieben. Hierbei wird die Stegkante 5 des Profilbauteils 3 mit der Vorderseite 6 des flächigen Bauteils 2 in Anlage gebracht. Weist das Profilbauteil 3 mehrere sich gegenüberliegende oder aneinandergrenzende stegförmige Abschnitte 4 auf, ist es vorteilhaft, wenn das flächige Bauteil mit den jeweiligen Stegkanten 5 dieser stegförmigen Abschnitte 4 jeweils in Anlage gebracht wird. Zusammen begrenzen das flächige Bauteil 2 und das Profilbauteil 3 dann einen Querschnitt eines quasi geschlossenen bzw. geschlossenen Körpers, bzw. nach Abschluss des Fügeverfahrens, eines Verbundkörpers 1.

Nachdem die Stegkante 5 mit der Vorderseite 6 des flächigen Bauteils 2 in Anlage gebracht worden ist, wird der Energiestrahl 8 auf eine Rückseite 7 des flächigen Bauteils 2, die der Vorderseite 6 gegenüber liegt, gerichtet, so dass der Energiestrahl 8 zuerst auf der Rückseite 7 in das flächige Bauteil 2 eindringt. Vorzugsweise trifft der Energiestrahl 8 in einem Winkelbereich von +45° bis -45° zur Senkrechten auf die Rückseite 7 des flächigen Bauteils 2 auf. In Figur 2 ist ein rechtwinkliger Strahleinfall dargestellt.

In jedem Fall erfolgt durch den Energiestrahl 8 eine Verschweißung der Vorderseite 6 des flächigen Bauteils 2 mit der Stegkante 5, die sich in Anlage mit dem entsprechenden Bereich der Vorderseite 6 des flächigen Bauteils 2 befindet. Vorzugsweise wird der Energiestrahl 8 dabei derart fokussiert, dass eine lokal begrenzte Schmelzzone 9 in einem Bereich des flächigen Bauteils 2 gebildet wird, der sich in Anlage mit der Stegkante 5 des Profilbauteils 3 befindet. Idealerweise bildet sich die Schmelzzone 9 ausschließlich auf der Vorderseite 6 des flächigen Bauteils 2, d.h. auf der Seite des flächigen Bauteils 2, die der Eintrittsoberfläche des Energiestrahls 8 gegenüberliegt. Vorzugsweise ist die Energiedichte und Fokussierung des Energiestrahls 8 dabei so zu wählen, dass die Rückseite 8, d.h. die Eintrittsseite des Energiestrahls 8, nicht angeschmolzen wird bzw. nicht ihre Materialeigenschaften verändert.

Insbesondere ist es vorteilhaft, wenn als Energiestrahl 8 ein Laserstrahl verwendet wird, um die Stegkante 5 mit der Vorderseite 6 des flächigen Bauteils 2 zu verschweißen. Bei dem sogenannten Wärmeleitungsschweißen wird zur Steuerung der Strahlintensität die Wellenlänge des Laserstrahls und der Einfallswinkel im Hinblick auf die Eindringtiefe des Strahls in das flächige Bauteil 2 berücksichtigt.

Jedoch ist es auch denkbar, dass als Energiestrahl 8 ein Elektronenstrahl zum Einsatz kommt. Dem Laserstrahl- und Elektronenstrahlschweißen ist es gemein, dass hohe Energiedichten genau und lokal begrenzt in den Bereich der Anlagefläche der beiden Bauteile 2,3 eingebracht werden.

Es ist möglich, eine Steuerung vorzusehen, durch die der Energiestrahl 8 auf der Rückseite 7 des flächigen Bauteils 2 entlang der Stegkante 5 geführt wird. Die Steuerung der Energiestrahlführung kann linear oder auch krummlinig, jedoch mit Ablenkung in zwei oder drei Ebenen erfolgen. Hierbei kann zum einen die Strahlenquelle des Energiestrahls 8 direkt gesteuert werden, oder der Strahlengang kann durch Umlenkung und/oder Fokussierung des Energiestrahls 8 geändert werden (ein- oder mehrdimensionale Ablenkung (Elektronenstrahl) oder optische Ablenkung (Laserstrahl)).

Ebenso kann eine Steuerung vorgesehen werden, die die Intensität und/oder Wellenlänge des Energiestrahls in Abhängigkeit von der Dicke des flächigen Bauteils 2 und/oder der gewünschten Eindringtiefe entlang der Stegkante 5 steuert. Bei der Steuerung der Energiestrahlwellenlänge und/oder -intensität und der Energiestrahlführung kann auch das Material der Bauteile 2,3, deren Wärmeleitfähigkeit und/oder deren Reflektivität berücksichtigt werden.

Informationen zu diesen Eigenschaften der Bauteile 2,3 können in Bauteilprofilen hinterlegt werden, die für die obengenannten Steuerungen zur Verfügung gestellt werden. Vorzugsweise kann jedoch auch ein Regelkreis vorgesehen werden, in dem beispielsweise die Temperatur/-en der entsprechenden Bauteilzonen (z.B. Rückseite 7, Wandung im Bereich der Stegkante 5) oder die Reflexion des Energiestrahls 8 an der Rückseite 7 sensorisch bestimmt werden. Hierbei ist eine berührungslose Temperaturerfassung der Bauteile 2,3 durch Infrarotsensoren vorteilhaft. Die Sensorinformationen als Regelgrößen werden anschließend für die obengenannte Steuerung des Energiestrahls 8, z.B. seiner Intensität oder Ablenkung, im Rahmen eines Regelkreises verwendet.

Die zuvor beschriebenen Ausführungsbeispiele beziehen sich auf ein Verfahren zur Herstellung einer Lehnen- und/oder Sitzstruktur, beispielsweise eines Fahrzeuges, vorzufinden ist, aufweisend zumindest ein flächiges Bauteil und ein Profilbauteil 2, das zumindest einen, oder zwei gegenüberliegende, stegförmige Abschnitte 4 aufweist, mit je einer Stegkante 5, wobei das flächige Bauteil 2 mit den Stegkanten 5 zumindest des einen, oder der zwei stegförmigen Abschnitte 4 in Anlage gebracht und die Stegkanten 5 mit der Vorderseite 6 des flächigen Bauteiles 2 durch einen auf einer Rückseite 7 des flächigen Bauteils 2 gerichteten Energiestrahl 8 verschweißt werden, wobei der Energiestrahl 8 derart fokussiert wird, dass eine lokal begrenzte Schmelzzone 9 in einem Bereich des flächigen Bauteils 2, der sich in Anlage mit den Stegkanten 5 des Profilbauteils 3 befindet, auf der Vorderseite 6 des flächigen Bauteils gebildet wird.

## Patentansprüche

1. Verfahren zur Herstellung einer Lehnen- und/oder Sitzstruktur für ein Fahrzeug, aufweisend ein flächiges Bauteil (2) und ein Profilbauteil (3) mit zumindest zwei gegenüberliegenden, stegförmigen Abschnitten (4) **dadurch gekennzeichnet, dass**, wobei das flächige Bauteil (2) mit den Stegkanten (5) zumindest beider stegförmiger mit je einen Stigkante (5) Abschnitte (4) in Anlage gebracht und die Stegkanten (5) mit einer Vorderseite (6) des flächigen Bauteiles durch einen auf eine Rückseite (7) des flächigen Bauteiles (2) gerichteten Energiestrahl (8) verschweißt werden, wobei der Energiestrahl (8) derart fokussiert wird, dass eine lokal begrenzte Schmelzzone (9) in einem Bereich des flächigen Bauteiles (2), der sich in Anlage mit den Stegkanten (5) des Profilbauteils (3) befindet, auf der Vorderseite (6) des flächigen Bauteils gebildet wird und der Energiestrahl (8) gesteuert auf der Rückseite (7) des flächigen Bauteiles (2) entlang der Stegkanten (5) unter Regelung von Energiestvahlwellenlänge und/odn Intinzität oder Ablenkung des Energiestrahl, geführt wird.

2. Verfahren nach Anspruch 1, **dadurch gekennzeichnet dass** der Energiestrahl (8) in einem Winkelbereich von +45° bis -45° zur Senkrechten, insbesondere rechtwinklig, auf die Rückseite (7) des flächigen Bauteils (2) gerichtet wird.

3. Verfahren nach einem der Ansprüche 1 oder 2, **dadurch gekennzeichnet dass** der Energiestrahl (8) ein Laserstrahl ist.

4. Verfahren nach einem der Ansprüche 1 bis 3, **dadurch gekennzeichnet dass** der Energiestrahl (8) ein Elektronenstahl ist.

5. Verfahren nach einem der vorangehenden Ansprüche 1 bis 4, **dadurch gekennzeichnet dass** das flächige Bauteil (2) und/oder das Profilbauteil (3) aus Stahl, Edelstahl, oder aus Legierungen auf Aluminium- und/oder Magnesiumbasis hergestellt wird/werden.

6. Verfahren nach einem der vorangehenden Ansprüche 1 bis 5, **dadurch gekennzeichnet dass** Intensität und/oder Wellenlänge des Energiestrahls (8) in Abhängigkeit von der Dicke des flächigen Bauteils (2) und/oder der gewünschten Eindringtiefe entlang der Stegkante (5) des Profilbauteils (3) angepasst werden.

7. Verfahren nach einem der vorangehenden Ansprüche 1 bis 5, **dadurch gekennzeichnet dass** Intensität und/oder Wellenlänge des Energiestrahls (8), sowie die Führung des Energiestrahls (8) an die Wärmeleitfähigkeit und/oder Reflektivität des Materials des flächigen Bauteils (2) und/oder des Profilbauteils (3) angepasst werden.

## Claims

1. Process for the production of a leaning and/or sitting structure for a vehicle, having a flat component (2) and a profile component (3) with at least two opposing rib-shaped sections (4), each with a rib edge (5), **characterised in that** the flat component (2) is brought into contact with the rib edges (5) of at least both rib-shaped sections (4) and the rib edges (5) are welded with a front side (6) of the flat component by an energy beam (8) directed onto a reverse side (7) of the flat component (2), wherein the energy beam (8) is focussed such that a locally limited melting zone (9) is formed in an area of the flat component (2) which is located in contact with the rib edges (5) of the profile component (3), on the front side (6) of the flat component, and the energy beam (8) is passed in a controlled manner on the reverse side (7) of the flat component (2) along the rib edges (5) with regulation of energy beam wavelength and/or intensity or deflection of the energy beam.

2. Process according to claim 1, **characterised in that** the energy beam (8) is directed in an angle range of +45° to -45° to the vertical, in particular at right angles, onto the reverse side (7) of the flat component (2).

3. Process according to one of claims 1 or 2, **characterised in that** the energy beam (8) is a laser beam.

4. Process according to one of claims 1 to 3, **characterised in that** the energy beam (8) is an electron beam^{*}.

5. Process according to one of the preceding claims 1 to 4, **characterised in that** the flat component (2) and/or the profile component (3) is/are produced from steel, special steel or from alloys on an aluminium and/or magnesium basis.

6. Process according to one of the preceding claims 1 to 5, **characterised in that** intensity and/or wavelength of the energy beam (8) are adjusted as a function of the thickness of the flat component (2) and/or the desired depth of penetration along the rib edge (5) of the profile component (3).

7. Process according to one of the preceding claims 1 to 5, **characterised in that** intensity and/or wavelength of the energy beam (8) and the passing of the energy beam (8) are adjusted to the thermal conductivity and/or reflectivity of the material of the flat component (2) and/or the profile component (3).

## Revendications

1. Procédé pour fabriquer une structure de dossier et/ou d'assise pour un véhicule, comportant une pièce plane (2) et une pièce profilée (3) avec au moins deux parties opposées en forme de branches (4) comportant chacune un bord de branche (5), **caractérisé en ce que** la pièce plane (2) est appliquée contre les bords (5) des deux parties en forme de branches (4), au moins, et les bords (5) sont soudés à une face avant (6) de la pièce plane grâce à un faisceau d'énergie (8) dirigé vers une face arrière (7) de la pièce plane (2), étant précisé que le faisceau d'énergie (8) est focalisé de telle sorte qu'une zone de fusion (9) limitée localement se forme sur la face avant (6) de la pièce plane, dans une zone de ladite pièce plane (2) qui est appliquée contre les bords de branches (5) de la pièce profilée (3), et le faisceau d'énergie (8) est guidé de manière dirigée vers la face arrière (7) de la pièce plane (2) le long des bords de branches (5) à l'aide d'un réglage de la longueur d'onde de faisceau d'énergie et/ou de l'intensité ou de la déviation du faisceau d'énergie.

2. Procédé selon la revendication 1, **caractérisé en ce que** le faisceau d'énergie (8) est dirigé vers la face arrière (7) de la pièce plane (2) dans une plage angulaire de +45° à -45° par rapport à la verticale, en particulier à angle droit.

3. Procédé selon l'une des revendications 1 ou 2, **caractérisé en ce que** le faisceau d'énergie (8) est un faisceau laser.

4. Procédé selon l'une des revendications 1 à 3, **caractérisé en ce que** le faisceau d'énergie (8) est un faisceau électronique.

5. Procédé selon l'une des revendications 1 à 4 précédentes, **caractérisé en ce que** la pièce plane (2) et/ou la pièce profilée (3) sont fabriquées à partir d'acier, d'acier spécial ou d'alliages à base d'aluminium et/ou de magnésium.

6. Procédé selon l'une des revendications 1 à 5 précédentes, **caractérisé en ce que** l'intensité et/ou la longueur d'ondes du faisceau d'énergie (8) sont adaptées en fonction de l'épaisseur de la pièce plane (2) et/ou de la profondeur de pénétration souhaitée, le long du bord de branche (5) de la pièce profilée (3).

7. Procédé selon l'une des revendications 1 à 5 précédentes, **caractérisé en ce que** l'intensité et/ou la longueur d'ondes du faisceau d'énergie (8) ainsi que le guidage du faisceau d'énergie (8) sont adaptés à la conductibilité thermique et/ou au pouvoir réfléchissant du matériau de la pièce plane (2) et/ou de la pièce profilée (3).
